# EUROPEAN PATENT APPLICATION

(11) **EP 2 366 585 A1**
(43) Date of publication of application: **21.09.2011**
(21) Application number: 11158366.2
(22) Date of filing: 15.03.2011
(51) Int. Cl.: B60P 3/04

(54) **Trailer for transporting animals, in particular horses**

(30) Priority: 15.03.2010 NL 2004398
(71) Applicant: Vloet Onroerende Zaken BV, 5431 NS Cuijk (NL)
(72) Inventor: Vloet, Antonius Wilhelmus Johannus Petrus, 5431 NS Cuijk (NL)
(74) Representative: Verhees, Godefridus Josephus Maria

(57) **Abstract**

A trailer 1 for transporting animals, more particularly horses, comprises a horsebox 7 in which are positioned butt tubes 19 at the rear of the trailer. The butt tubes can be displaced between a stop position 21 in which they extend behind the rear quarters of the horse and an open position 23 in which they give free passage to the horse to unload from the horsebox.

The butt tubes 19 are hingeably connected with a first end 19A to the dividing wall 15 of the horsebox 7 and with the second end 19B catch on displaceable latching mebbers. These latching elements can be displaced to a release position by displacing means. These displacing means can be operated at the front of the horsebox, so that the rider can lower the butt tube from the front and can then walk out of the horsebox with his horse without the need to first release the butt tube at the back.

## Description

### Field of the invention

The invention relates to a trailer for transporting horses, comprising a horsebox divided into two stalls, twin axles and wheels carried by them, a towing hitch connected to the front of the horsebox for coupling the trailer to a tow vehicle, a ramp present on the rear of the horsebox for loading and unloading horses, a front door present at the front of the horsebox, a dividing wall extending in longitudinal direction of the horsebox, and present near the rear side in the horsebox butt tubes that can be moved between a stop position in which, in the presence of horses in the horsebox, they extend behind the rear quarters of the horses and block the passageway for unloading the horses, and an open position in which they are located outside the passageway for allowing free passage for the horses to onload from the horsebox, which trailer furthermore comprises displacing means with which the butt tubes can be moved from the stop position into the open position, which displacing means further comprise operating means which are installed at the front of the horsebox and which horse trailer comprises displaceable latching elements for latching the butt tubes in the stop position, which latching elements can be displaced by the displacing means from a latched position, in which they retain the butt tubes in the stop position, to an open position, in which the butt tubes can move to the open position, where the butt tubes are hingeably suspended on a first end and engage with the latching elements with the other, second, end.

### State of the art

A horse is loaded into a stall by first lowering the ramp after which the rider walks with the horse into the stall. Subsequently, the rider passes under a front bar at the front of the stall and ties the horse up at the front of the stall. Then the rider walks out through the front door towards the rear of the stall. Arriving there the rider moves the butt tube behind the rear quarters of the horse and latches it. Finally, the ramp is closed.

Then the ride to the destination takes place. In most cases the horse gets a bit upset because it does not know what happens around it. The horse cannot put the ride in perspective.

Having arrived at the destination, the ramp door is opened and the butt tube is released by the rider and brought to a position where it does not thwart the passage of the horse out of the stall. The moment the butt tube is released, the horse will make a step backwards because it will leave the stall soonest possible. At that moment there is already a kind of tension because the horse is still tied up at the front. Then the rider enters the stall through the front door and releases the horse and leaves the stall together with the horse. In many cases the horse is then leading. Thus the rider is then pulled outwards and this causes stress to be built up both with the rider and the horse.

An animal transporter of the type defined in the opening paragraph is known from GB-A-2 415 351. In this document fetching the horse from the stall causes less stress to be built up. The ramp is lowered after which the rider enters the stall through the front door and releases the horse. Then the rider leads the horse a few centimeters forwards to releave the butt tube and moves the butt tube to the open position by means of the operating means near the front of the stall. Subsequently, the rider and the horse will step out of the stall. In this case the rider is leading because the horse has not earlier hit on the idea of walking out of the stall. In this manner there is less stress with the horse and much less danger for the rider because the timing of the steps is much more advantageous.

### Summary of the invention

It is an object of the present invention to provide a trailer of the type defined in the opening paragraph where the latching element as well as the displacing means are improved compared to the known trailer. To this end the trailer according to the invention is characterised in that the butt tubes are hingeably connected with the first end to the dividing wall between the stalls and the latching elements and displacing means are connected to side walls of the horsebox. By installing the displacing means against the side wall of the stall in lieu of in the butt tubes or against the dividing wall, they are easily accessible and robust in case of disturbances.

An advantageous embodiment of the trailer according to the invention is characterised in that the latching elements can be displaced against a spring force from the latched position to the release position and the displacing means can retract the latching elements against the spring force, so that the butt tubes as a result of gravity fall to the open position hinging on the first end.

A further advantageous embodiment of the trailer according to the invention is characterised in that the latching elements each comprise a slide that is provided with two or more openings and can latch the second end of the butt tube at various locations, so that the position of the second end of the butt tube is adjustable.

### Brief description of the drawings

The invention will be described hereinbelow in more detail based on an example of embodiment of the trailer according to the invention represented in the drawing figures, in which:
Fig. 1 shows a perspective view of the trailer with the positions of the butt tubes indicated therein;
Fig. 2 shows a top plan view of the trailer with the roof removed;
Fig. 3 shows latching and displacing means of the trailer for retaining the butt tube in the stop position and move it to the open position;
Fig. 4 shows a side view of the latching and displacing means shown in Fig. 3; and
Fig. 5 shows an alternative embodiment of the latching and displacing means.

### Detailed description of the drawings

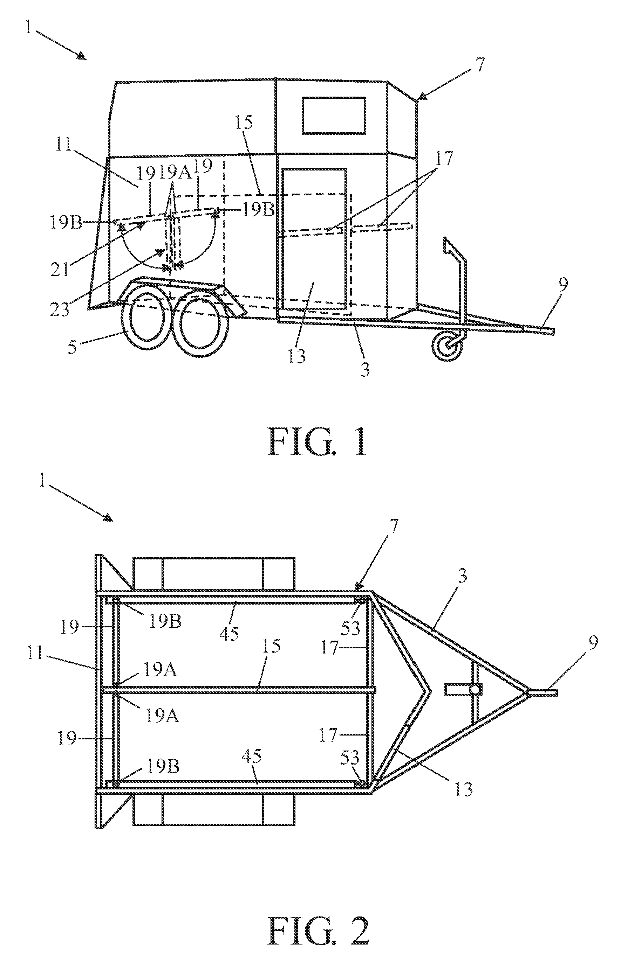

Fig. 1 shows a perspective view of the horse trailer according to the invention. The trailer 1 comprises a chassis 3 with wheels 5 attached thereto and a horsebox 7 constructed thereon. At the front of the chassis there is a towing hitch 9 present for coupling the trailer to a tow vehicle. At the rear of the horsebox there is a ramp 11 for loading and unloading horses and at the front of the horsebox there is a front door 13.

The horsebox 7 comprises a dividing wall 15 that splits the space into two stalls so that two horses can be transported. At the front there is a chest tube 17 in each stall and a butt tube 19 is to be found at the back of each stall. Each butt tube is displaceable between a stop position 21, in which, in the presence of a horse in the stall, it extends behind the rear quarters of the horse and thwarts the passage for unloading the horse, and an open position 23 in which it is located outside the passageway and allows open passage to the horse to onload from the stall.

Fig. 2 shows a top plan view of the trailer with the roof removed and the butt tubes 19 in stop position. The butt tubes 19 are hingeably connected with a first end 19A to the dividing wall 15 of the horsebox 7 and with the second end 19B present behind displaceable latching elements. These latching elements can be displaced by displacing means from a latch position to a release position.

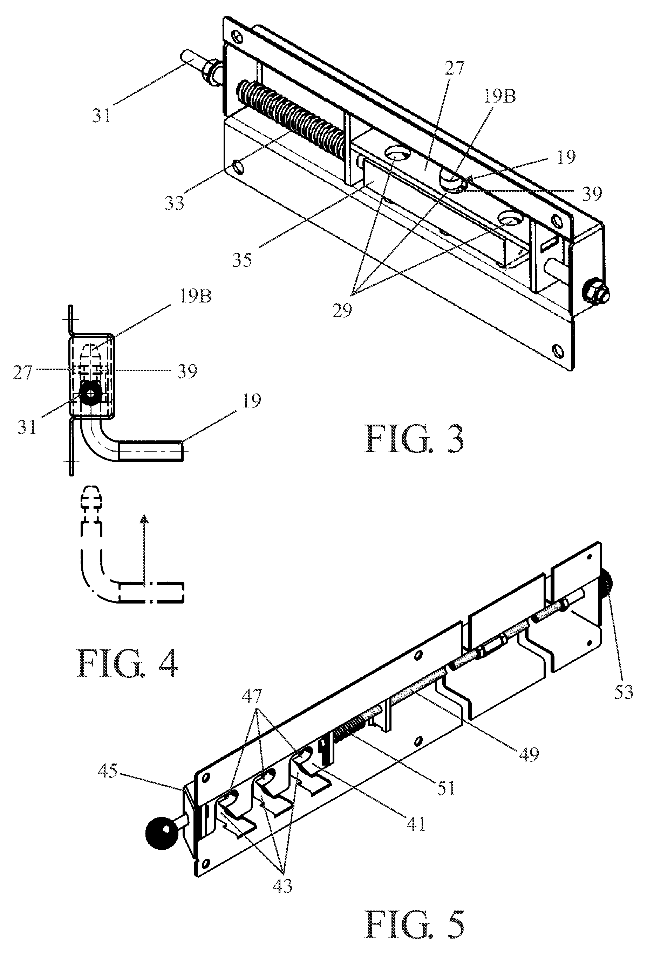

Fig. 3 shows a first embodiment of the latching and displacing means of the trailer. The latching means comprise a latching element which is formed by a slide 27 with holes 29. The displacing means are formed by a rod 31 that is attached to the slide. A spring 33 pushes the slide 27 to the right in Fig. 3. The second end 19B of the butt tube 19, which end in this embodiment is bent upwards at right angles from below through one of the holes provided in a block 35 and sticks through one of the holes 29 into the slide 27. This is distinctly shown in Fig. 4 which shows a side view of the latching and displacing means. Adjacent to this end 19B the butt tube comprises a groove 39 accommodating the slide 27 which thus latches the butt tube 19.

The rod 31 extends to near the front of the stall and at its free end has a knob forming the operating means. By means of the knob the tube can be pulled at in a simple manner as a result of which the slide 27 is moved to a release position against the spring force. In this release position the slide has been pulled out of the groove 39, so that the butt tube 19 falls down and while doing so hinges on a first end 19A until it reaches the dividing wall 15.

The slide 27 has several holes 29 into which the butttube 19 can be stuck. As a result, the position of the butt tube in the stop position can be selected within the bounds of possibility.

Fig. 5 shows a second embodiment of the latching and displacing means for the butt tube. The latching element here too is formed by a slide 41 but has recesses 43 in this case and has a different orientation. The end of the butt tube is not bent and can be brought to engage with one of the recesses 43 through holes in a protective cap 45 and thus catch on a bounding wall 47 of the recess, so that the position of the second end of the butt tube is adjustable. Also in this case a rod 49 is fixed to the slide and the slide can be moved to the release position against the force of a spring 51. The protective cap 45 and the rod 49 extend to near the front of the horsebox, cf. Fig. 2, and at the free end of the rod there is again a knob 53 so that the rod 49 can be pulled at in a simple manner.

Albeit the invention has been described in the foregoing based on the drawing figures, it should be observed that the invention is not by any manner or means restricted to the embodiment shown in the drawing figures. The invention also extends to all embodiments deviating from the embodiment shown in the drawing figures within the spirit and scope defined by the claims.

## Claims

1. A trailer for transporting horses, comprising a horsebox divided into two stalls, twin axles and wheels carried by them, a towing hitch connected to the front of the horsebox for coupling the trailer to a tow vehicle, a ramp present on the rear of the horsebox for loading and unloading horses, a front door present at the front of the horsebox, a dividing wall extending in longitudinal direction of the horsebox, and present near the rear side in the horsebox butt tubes that can be moved between a stop position in which, in the presence of horses in the horsebox, they extend behind the rear quarters of the horses and block the passageway for unloading the horses, and an open position in which they are located outside the passageway for allowing free passage to the horses to onload from the horsebox, which trailer furthermore comprises displacing means with which the butt tubes can be moved from the stop position into the open position, which displacing means further comprise operating means which are installed at the front of the horsebox and which horse trailer comprises displaceable latching elements for latching the butt tubes in the stop position, which latching elements can be displaced by the displacing means from a latched position, in which they retain the butt tubes in the stop position, to an open position, in which the butt tubes can move to the open position, where the butt tubes are hingeably suspended on a first end and engage with the latching elements with the other, second, end, **characterised in that** the butt tubes are hingeably connected with the first end to the dividing wall between the stalls and the latching elements and displacing means are connected to side walls of the horsebox.

2. A trailer as claimed in claim 1, **characterised in that** the latching elements can be displaced against a spring force from the latched position to the release position and the displacing means can retract the latching elements against the spring force, so that the butt tubes as a result of gravity fall to the open position hinging on the first end.

3. A trailer as claimed in claim 1 or 2, **characterised in that** the latching elements each comprise a slide that is provided with two or more openings and can latch the second end of the butt tube at various locations, so that the position of the second end of the butt tube is adjustable.
